# FASCICULE DE BREVET EUROPEEN

(11) **EP 2 176 114 B1**
(45) Date de publication et mention de la délivrance du brevet: **20.04.2011**
(21) Numéro de dépôt: 07871925.9
(22) Date de dépôt: 12.12.2007
(51) Int. Cl.: B62D 53/00, B60K 6/00, B60P 1/64, B60K 6/48, B60P 3/00

(54) **VEHICULE AUTOMOTEUR PROPRE DE TRANSPORT LOURD, NOTAMMENT PORTUAIRE**
SELBSTFAHRENDES SCHWERTRANSPORTFAHRZEUG, INSBESONDERE ZUR VERWENDUNG IN HÄFEN
SELF-PROPELLED HEAVY TRANSPORT VEHICLE, PARTICULARLY FOR USE IN PORTS

(30) Priorité: 03.08.2007 FR 0756920
(43) Date de publication de la demande: 21.04.2010
(73) Titulaire: Gaussin, Christophe, 1093 La Conversion (CH)
(72) Inventeur: Gaussin, Christophe, 1093 La Conversion (CH)
(74) Mandataire: Rhein, Alain
(86) Numéro de dépôt international: PCT/FR2007/052495
(87) Numéro de publication internationale: WO 2009/019329

(56) Documents cités:
- CA-A1- 2 457 216
- FR-A- 2 583 683
- US-A1- 2004 079 568
- US-A1- 2006 116 797
- ANONYME: "Kalmar helps develop a hybrid terminal tractor for US West Coast ports" KALMAR NEWS ARCHIVE, [Online] XP002471429 Extrait de l'Internet: URL:http://www.kalmarind.com/show.php?id=1 039828> [extrait le 2008-02-28]

## Description

La présente invention concerne un véhicule propre de transport lourd, notamment portuaire, comportant des moyens de roulement au sol conçus aptes à être entraînés par des moyens d'entraînement, des premiers moyens d'attelage conçus aptes à la traction d'une ou plusieurs remorques de transport de charges. Un tel véhicule est connu de US 2004/079568 A.

L'invention concerne encore un procédé d'utilisation d'un tel véhicule.

La présente invention entre dans le domaine des véhicules à déplacement terrestre.

Dans les installations portuaires, il est connu d'effectuer le transport des marchandises en transit, en particulier quand ces marchandises sont des conteneurs, par des trains de remorques ou semi-remorques attelées à un véhicule tracteur.

La consommation d'énergie, qui représente le premier facteur de coût en manutention portuaire, n'est pas maîtrisée avec les moyens tracteurs connus, toujours surdimensionnés, et on constate peu de différence de consommation entre les trajets en charge et les trajets à vide. Il s'agit de la principale préoccupation des exploitants, qui se conjugue avec une préoccupation écologique plus universelle.

L'invention se propose de pallier ce problème de la consommation d'énergie, en proposant un véhicule automoteur conçu apte à mettre en oeuvre plusieurs types de moyens d'entraînement selon la phase de manutention concernée.

A cet effet, l'invention concerne un véhicule propre de transport lourd, notamment portuaire, comportant des moyens de roulement au sol conçus aptes à être entraînés par des moyens d'entraînement, des premiers moyens d'attelage conçus aptes à la traction d'une ou plusieurs remorques de transport de charges, caractérisé par le fait que ledit véhicule comporte des premiers moyens d'entraînement conçus aptes à la traction en charge d'un train de remorques de masse donnée, et au moins des seconds moyens d'entraînement conçus aptes à la traction à vide dudit train de remorques.

Selon une autre caractéristique de l'invention, ledit véhicule comporte des moyens de conversion conçus aptes à charger des moyens de stockage d'énergie, notamment des batteries électriques.

Selon une autre caractéristique de l'invention, lesdits moyens de conversion conçus aptes à charger des moyens de stockage d'énergie sont conçus aptes à charger des sources d'énergie pendant le roulage.

Selon une autre caractéristique de l'invention, ledit véhicule comporte des moyens d'entraînement électriques.

Selon une autre caractéristique de l'invention, lesdits moyens d'entraînement électriques sont logés dans des moyens de roulement dudit véhicule.

L'invention concerne encore un procédé d'utilisation d'un tel véhicule, caractérisé par le fait qu'on effectue un cycle complet, depuis un premier point de chargement/déchargement, via un second point de déchargement/chargement, et un retour audit premier point, en effectuant le déplacement en charge sous l'effet de premiers moyens d'entraînement, le déplacement à vide sous l'effet de seconds moyens d'entraînement lors d'un trajet volontairement ralenti pour permettre la conversion d'énergie de roulage par des moyens de conversion vers des moyens de stockage d'énergie à une vitesse, qui est régulée par des moyens de commande de gestion conçus aptes à échanger des informations avec des moyens de conversion et des moyens de stockage d'énergie, et qui est maintenue inférieure à une vitesse limite donnée, et que pendant la phase d'attente, on utilise des moyens d'entraînement électrique, alimentés par lesdits moyens de stockage d'énergie.

L'invention procure d'indéniables avantages à l'exploitant.

Les technologies choisies pour les moyens d'entraînement, et le mode d'utilisation de ces moyens d'entraînement, en combinaison avec des moyens de génération et de stockage d'énergie, permettent de concevoir véritablement un véhicule propre.

Le véhicule selon l'invention est conçu, en particulier pour utiliser de l'énergie électrique dans les manoeuvres nécessitant le moins de couple. Le véhicule selon l'invention est, avantageusement, conçu pour intégrer des moteurs électriques dans certaines de ses roues.

D'autres caractéristiques et avantages de l'invention ressortiront de la description détaillée qui va suivre, se rapportant à un exemple de réalisation donné à titre indicatif et non limitatif.

La compréhension de cette description sera facilitée en se référant aux dessins joints dans lesquels :

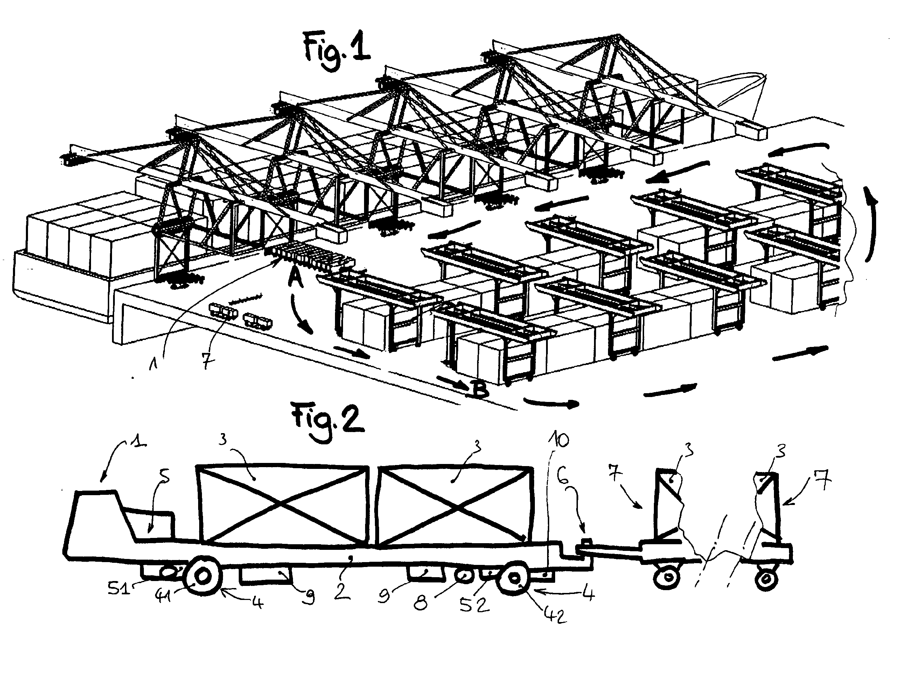

- la figure 1 représente de manière schématique et en perspective, une installation portuaire, avec un navire porte-conteneurs à quai, et des moyens de manutention de ces conteneurs ;
- la figure 2 représente, de façon schématique et en élévation, un véhicule dans un des modes de réalisation de l'invention.

Tel que visible dans les figures des dessins joints, la présente invention concerne le domaine des véhicules à déplacement terrestre et en particulier les trains de remorques, et a trait à un véhicule automoteur pour la traction d'un tel train.

L'invention concerne un véhicule 1 propre de transport lourd, automoteur, notamment de manutention portuaire. On entend par transport lourd des charges de plusieurs tonnes ou de plusieurs dizaines de tonnes, telles que des conteneurs ou des caisses transportés par des navires. Ce véhicule 1 comporte une structure 2, préférentiellement conçue apte à recevoir et transporter une charge utile 3 telle qu'un conteneur ou similaire. Le véhicule 1 comporte des moyens de roulement au sol 4. Ces derniers sont conçus aptes à être entraînés par des moyens d'entraînement 5. Le véhicule 1 comporte des premiers moyens d'attelage 6 conçus aptes à la traction d'une ou plusieurs remorques 7 de transport de charges.

L'invention a pour but de fournir une solution au problème de la consommation énergétique par rapport à une configuration équivalente de l'art antérieur constituée d'un tracteur attelé à une remorque. A titre d'exemple, en utilisation portuaire, un cycle usuel est de l'ordre de 14 minutes.

Ce cycle se décompose en :
- prise d'une charge, comme un conteneur, au niveau d'un poste de chargement sous des moyens de chargement, conçus aptes à charger ou décharger un navire,
- transport de la charge sur son site de destination,
- attente des moyens de déchargement, tels qu'une grue,
- déchargement,
- retour au poste de chargement,
- attente d'une nouvelle charge.

Dans une utilisation selon l'art antérieur, seulement 10% du temps, soit 1,5 minutes, est du transport. Pendant 9 minutes d'attente, le moteur du tracteur tourne pour rien (environ 4 équivalents litres de carburant/heure). Le déplacement à vide pour le trajet retour dure environ 3,5 minutes. Du fait de la charge, le tracteur est lesté pour ne pas patiner, donc consomme la pleine puissance, soit 200kw pour son déplacement en charge (environ 30 équivalents litres carburant/heure). Un tel cycle classique avec les moyens de l'art antérieur équivaut à la consommation de 3,1 équivalents litres de carburant.

La solution fournie par l'invention est celle d'un véhicule 1 automoteur, dont la structure 2 constitue le lest. Son cycle spécial se décompose en :
- 1,5 minutes à 200kw pour déplacement en charge sous l'effet de premiers moyens d'entraînement 51, consommant environ 30 équivalents litres carburant/heure),
- 3,5 minutes à 30kw pour déplacement à vide sous l'effet de seconds moyens d'entraînement 52, consommant environ 4 équivalents litres de carburant/heure, lors d'un trajet retour volontairement ralenti pour permettre la conversion d'énergie de roulage par des moyens de conversion 8 vers des moyens de stockage 9 d'énergie, le ralentissement permettant encore de réduire les niveaux sonore et de pollution;
- 9 minutes pendant la phase d'attente, avec des moyens d'entraînement électrique 10, alimentés par ces moyens de stockage d'énergie 9. En particulier une solution hybride utilise des batteries pouvant être rechargées pendant le temps de roulage, et cette phase d'attente correspond ainsi à une consommation d'énergie quasiment nulle.

La consommation lors du cycle spécial adapté à l'invention est alors de 1,0 équivalents litres de carburant, soit le tiers de la consommation dans un cycle classique avec les moyens de l'art antérieur.

On effectue ainsi un cycle complet, depuis un premier point de chargement/déchargement A, via un second point de déchargement/chargement B, et un retour audit premier point A, en effectuant le déplacement en charge sous l'effet de premiers moyens d'entraînement 51, le déplacement à vide sous l'effet de seconds moyens d'entraînement 52 lors d'un trajet volontairement ralenti pour permettre la conversion d'énergie de roulage par des moyens de conversion 8 vers des moyens de stockage 9 d'énergie, et que pendant la phase d'attente, on utilise des moyens d'entraînement électrique 10, alimentés par lesdits moyens de stockage d'énergie 9. Le ralentissement de ce trajet est régulé par des moyens de commande de gestion conçus aptes à échanger des informations avec des moyens de conversion 8 et des moyens de stockage 9 d'énergie, moyens de commande de gestion qui maintiennent la vitesse du véhicule 1 inférieure à une vitesse limite donnée. Dans une application préférée, on choisit cette vitesse limite donnée à la valeur de 15 km/heure.

Naturellement le cycle est applicable de façon similaire en intervertissant les opérations de chargement et de déchargement.

Le bilan énergétique calculé pour un grand port, tel que le port de Dubaï par lequel transitent 4 millions de conteneurs par an, et dont le budget énergétique actuel en carburants est d'environ 18 millions $ par an, montre une économie d'environ 12 millions $ par an, en utilisant uniquement des véhicules selon l'invention, soit un gain d'environ 65%.

Encore ce calcul est-il fait sur la base d'une masse équivalente des véhicules dont on compare l'utilisation.

Le véhicule selon l'invention comporte, dans un mode de réalisation préféré, des premiers moyens d'entraînement 51 conçus aptes à la traction en charge d'un train de remorques 7 de masse donnée, et au moins des seconds moyens d'entraînement 52 conçus aptes à la traction à vide dudit train de remorques 7.

Dans un premier mode de réalisation, les premiers 51 et seconds 52 moyens d'entraînement sont conçus aptes à entraîner un même essieu du véhicule 1.

Dans un second mode de réalisation, les premiers 51 et seconds 52 moyens d'entraînement sont conçus aptes à entraîner deux essieux différents du même véhicule 1.

Ces premiers 51 et seconds 52 moyens d'entraînement peuvent être interactifs, ou complètement différenciés, et dans ce dernier cas peuvent être utilisés en complément les uns des autres. Ils sont conçus pour pouvoir être utilisés différemment selon la phase d'utilisation.

Par exemple, il est possible de démarrer le véhicule automoteur 1 à l'aide de premiers moyens d'entraînement 51 constitués de moyens thermiques, puis de passer sur des seconds moyens d'entraînement 52 tels que des moyens de traction électriques sur l'inertie, en conjugaison éventuelle avec des volants d'inertie.

Il est encore intéressant de combiner l'entraînement de premiers moyens de roulement 41, pour l'obtention de la pleine puissance par des premiers moyens d'entraînement 51, par exemple en hydrostatique pur, et l'entraînement de seconds moyens de roulement 42 par des seconds moyens d'entraînement 52 en électrique pur alimenté par des batteries 9.

Les moyens d'entraînement 5 peuvent notamment consister chacun en au moins un moteur thermique ou électrique, ou encore, de façon préférée, en un moteur hydraulique. Dans ce dernier cas, l'énergie hydraulique peut être fournie par une pompe entraînée par un moteur thermique ou/et un moteur électrique. Un tel moteur hydraulique peut, avantageusement, être réalisé avec une double cylindrée: petite cylindrée pour aller vite en démarrage et constituant alors les premiers moyens d'entraînement 51, grande cylindrée sur l'inertie en roulage constituant les seconds moyens d'entraînement 52.

Le véhicule 1 selon l'invention comporte préférentiellement des moyens d'entraînement électriques 10. Les moyens d'entraînement électriques 10 sont tout à fait appropriés pour une utilisation en roulage pur, une fois la phase de démarrage effectuée par des premiers moyens d'entraînement 51 aptes à développer le maximum de couple.

De façon avantageuse, ces moyens d'entraînement électriques 10 sont logés dans les moyens de roulement 4, notamment dans certaines roues du véhicule.

Des piles à combustible, ou encore des moteurs hybrides, constitueront, dès leur arrivée sur le marché, des solutions particulièrement intéressantes de moyens d'entraînement 5 pour des véhicules 1 selon l'invention.

Le véhicule selon l'invention comporte de préférence des moyens de conversion 8 conçus aptes à charger des moyens de stockage d'énergie 9, notamment des batteries électriques.

Ces moyens de conversion 8 peuvent consister en des moyens de conversion d'énergie cinétique en énergie électrique, tels que dynamos ou similaires conçus aptes à charger des moyens de stockage d'énergie 9 pendant le roulage, en des moyens de récupération d'énergie au freinage comme en technologie ferroviaire, ou encore des moyens passifs tels que panneaux photovoltaïques ou similaires. On comprend que, si la quantité d'énergie limitée fournie par ces derniers les destine plutôt à alimenter des moyens d'éclairage ou d'autres servitudes de faible puissance, on peut envisager d'adapter aux premiers des moyens de stockage 9 plus conséquents afin de fournir de l'énergie motrice.

De façon innovante, la gestion de la charge des moyens de stockage d'énergie 9, notamment de batteries, peut être optimisée avec une charge accélérée. Il est particulièrement intéressant d'effectuer un trajet de manutention entre deux sites de départ et de destination, avec un déplacement plus lent qu'avec des moyens classiques, pour optimiser la recharge des moyens de stockage 9 sous l'effet des moyens de conversion 8. En effet, les temps de transit sont toujours très faibles par rapport aux temps d'attente sur les sites de départ et de destination, et le gain énergétique compense largement l'effet du temps de transit rallongé. A cet effet, le véhicule 1 selon l'invention comporte avantageusement des moyens de mesure de la vitesse du véhicule, des moyens de mesure de couple au niveau des moyens de roulement 4, et des moyens de gestion et de commande pour surveiller le fonctionnement des moyens de charge d'une part, et le niveau des moyens de stockage d'énergie 9 d'autre part, et pour réguler la vitesse du convoi pour optimiser le rechargement de ces derniers. Ces moyens de gestion et de commande sont avantageusement capables de commander l'arrêt ou la marche des premiers 51 ou seconds 52 moyens d'entraînement, et d'en réguler les paramètres, en fonction de l'effort à fournir, notamment au démarrage et au freinage.

Les moyens de stockage d'énergie 9 peuvent consister en des batteries électriques, ou encore en des super-condensateurs capables de délivrer des puissances élevées sur un laps de temps court, et donc de fournir un appoint lors des démarrages, voire d'assurer ces démarrages.

Les moyens de stockage d'énergie 9 peuvent concerner de l'énergie électrique, ou/et pneumatique ou/et hydraulique. Ils sont avantageusement conçus aptes à alimenter d'autres dispositifs, par exemple de freinage ou de bridage de la charge utile 3 transportée sur le véhicule 1.

L'amélioration de la gestion de l'énergie passe aussi par une meilleure ergonomie des postes de travail, de façon à faciliter les opérations de dépose et d'enlèvement des charges utiles 3 en une seule manoeuvre, sans tâtonnement de la part de l'opérateur, ce qui permet de maîtriser la durée des cycles, et don la consommation d'énergie. Il est donc avantageux de faciliter, en particulier, la dépose d'une charge utile 3 sur un véhicule 1 selon l'invention, qui dispose des moyens de mobilité maximaux au sein du train de remorques qu'il entraîne. A cet effet, ce dernier comporte préférentiellement une surface 11 de réception de la charge utile 3.

Une version particulière du véhicule selon l'invention consiste en un véhicule 1 lourd, conçu au pas latéral standard des spreaders de dépose, et apte à recevoir d'un seul coup les deux ou quatre conteneurs que transporte ensemble un spreader, soit une charge de 160 tonnes environ dans le cas le plus défavorable pour quatre conteneurs de 20 pieds groupés en rectangle. Ce véhicule 1 peut tirer une ou plusieurs remorques 7 de configuration analogue. On notera que le spreader est capable de faire une légère correction angulaire si l'alignement tracteur-remorque n'est pas parfait.

De façon préférée, le véhicule selon l'invention comporte un seul essieu à chaque extrémité, de façon à éviter l'effet de ripage connu sur des véhicules à deux essieux jumelés se traduisant par le cisaillement au niveau des bandes de roulement, et ainsi à augmenter la durée de vie des bandages ou pneumatiques, selon le cas, et réduire la consommation d'énergie de traction, la résistance étant moindre en phase de virage.

Bien entendu, un véhicule automoteur selon l'invention, conçu pour être tracteur, peut également être employé comme véhicule-frein en queue de train, pour des opérations de manutention particulières.

## Revendications

1. Véhicule automoteur propre (1) de transport lourd, notamment portuaire, comportant des moyens de roulement (4) au sol conçus aptes à être entraînés par des moyens d'entraînement (5), des premiers moyens d'attelage (6) conçus aptes à la traction d'une ou plusieurs remorques (7) de transport de charges (3), **caractérisé par le fait que** ledit véhicule (1) comporte des premiers moyens d'entraînement (51) conçus aptes à la traction en charge d'un train de remorques (7) de masse donnée, et au moins des seconds moyens d'entraînement (52) conçus aptes à la traction à vide dudit train de remorques.

2. Véhicule (1) selon la revendication 1, **caractérisé par le fait qu'**il comporte des moyens de conversion (8) conçus aptes à charger des moyens de stockage d'énergie (9), notamment des batteries électriques.

3. Véhicule (1) selon la revendication 2, **caractérisé par le fait que** lesdits moyens de conversion (8) sont conçus aptes à charger des moyens de stockage d'énergie (9) pendant le roulage.

4. Véhicule (1) selon l'une des revendications 1 à 3, **caractérisé par le fait qu'**il comporte des moyens d'entraînement électriques (10).

5. Véhicule (1) selon la revendication 4, **caractérisé par le fait que** lesdits moyens d'entraînement électriques (10) sont logés dans des moyens de roulement (4) dudit véhicule (1).

6. Véhicule (1) selon l'une des revendications 1 à 5, **caractérisé par le fait que** lesdits premiers (51) et seconds (52) moyens d'entraînement sont conçus aptes à entraîner un même essieu.

7. Véhicule (1) selon l'une des revendications 1 à 6, **caractérisé par le fait que** lesdits premiers (51) et seconds (52) moyens d'entraînement sont conçus aptes à entraîner deux essieux différents.

8. Véhicule (1) selon l'une des revendications 1 à 6, **caractérisé par le fait que** ledit véhicule (1) est un porte-conteneurs.

9. Procédé d'utilisation d'un véhicule (1) selon l'une des revendications précédentes, **caractérisé par le fait qu'**on effectue un cycle complet, depuis un premier point de chargement/déchargement (A), via un second point de déchargement/chargement (B), et un retour audit premier point (A), en effectuant le déplacement en charge sous l'effet de premiers moyens d'entraînement (51), le déplacement à vide sous l'effet de seconds moyens d'entraînement (52) lors d'un trajet volontairement ralenti pour permettre la conversion d'énergie de roulage par des moyens de conversion (8) vers des moyens de stockage (9) d'énergie à une vitesse, qui est régulée par des moyens de commande de gestion conçus aptes à échanger des informations avec des moyens de conversion (8) et des moyens de stockage d'énergie (9), et qui est maintenue inférieure à une vitesse limite donnée, et que pendant la phase d'attente, on utilise des moyens d'entraînement électrique (10), alimentés par lesdits moyens de stockage d'énergie (9).

10. Procédé d'utilisation d'un véhicule (1) selon la revendication précédente, **caractérisé par le fait qu'**on fixe ladite vitesse limite à 15 km/heure.

## Claims

1. Heavy transport motor vehicle (1), namely for use in harbours, including means for rolling (4) on the ground designed capable of being driven by driving means (5), first coupling means (6) designed capable of drawing one or several trailers (7) for transporting loads (3), wherein said vehicle (1) includes first driving means (51) designed capable of drawing, under load, a train of trailers (7) of a given mass, and at least second driving means (52) designed capable of drawing, when empty, said train of trailers.

2. Vehicle (1) according to claim 1, wherein it includes conversion means (8) designed capable of loading energy-accumulation means (9), namely electric batteries.

3. Vehicle (1) according to claim 2, wherein said conversion means (8) are designed capable of loading energy-accumulation means (9) during rolling.

4. Vehicle (1) according to one of claims 1 to 3, wherein it includes electric driving means (10).

5. Vehicle (1) according to claim 4, wherein said electric driving means (10) are accommodated in rolling means (4) of said vehicle (1).

6. Vehicle (1) according to one of claims 1 to 5, wherein said first (51) and second (52) driving means are designed capable of driving one and the same axle.

7. Vehicle (1) according to one of claims 1 to 6, wherein said first (51) and second (52) driving means are designed capable of driving two different axles.

8. Vehicle (1) according to one of claims 1 to 6, wherein said vehicle (1) is a container carrier.

9. Method for using a vehicle (1) according to one of the preceding claims, wherein a complete cycle is carried out, from a first loading/unloading point (A), through a second loading/unloading point (B), and back to said first point (A), by carrying out the displacement under the action of first driving means (51), the displacement when empty under the action of second driving means (52) during a voluntarily slowed down travel distance, in order to permit the conversion of rolling energy by conversion means (8) to energy-accumulating means (9) at a speed, which is regulated by management control means designed capable of exchanging information with the conversion means (8) and energy-accumulating means (9) and maintained slower than a given limit speed, and during the waiting phase electric driving means (10) supplied with energy by said energy-accumulating means (9) are used.

10. Method for using a vehicle (1) according to the preceding claim, wherein said limit speed is set at 15 km/hour.

## Patentansprüche

1. Selbstfahrendes Schwertransportfahrzeug (1), insbesondere zur Verwendung in Häfen, umfassend Mittel zum Rollen (4) auf dem Boden, die geeignet vorgesehen sind, um durch Antriebsmittel (5) angetrieben zu werden, erste Kupplungsmittel (6), geeignet vorgesehen zum Ziehen von einem oder von mehreren Anhängern (7) für die Beförderung von Lasten (3), **dadurch gekennzeichnet, dass** das besagte Fahrzeug (1) erste Antriebsmittel (51), geeignet vorgesehen zum Ziehen eines beladenen Anhängerzuges (7) mit einem bestimmten Gewicht, und zumindest zweite Antriebsmittel (52), geeignet vorgesehen für das Ziehen des besagten unbeladenen Anhängerzuges, umfasst.

2. Fahrzeug (1) nach Anspruch 1, **dadurch gekennzeichnet, dass** es Umwandlungsmittel (8) umfasst, die geeignet vorgesehen sind, um Mittel zur Energiespeicherung (9), insbesondere elektrische Batterien, zu laden.

3. Fahrzeug (1) nach Anspruch 2, **dadurch gekennzeichnet, dass** die besagten Umwandlungsmittel (8) geeignet vorgesehen sind, um Mittel zur Energiespeicherung (9) während dem Rollen zu laden.

4. Fahrzeug (1) nach einem der Ansprüche 1 bis 3, **dadurch gekennzeichnet, dass** es elektrische Antriebsmittel (10) umfasst.

5. Fahrzeug (1) nach Anspruch 4, **dadurch gekennzeichnet, dass** die besagten elektrischen Antriebsmittel (10) in den Mitteln zum Rollen (4) des besagten Fahrzeugs (1) angeordnet sind.

6. Fahrzeug (1) nach einem der Ansprüche 1 bis 5, **dadurch gekennzeichnet, dass** die besagten ersten (51) und zweiten (52) Antriebsmittel geeignet vorgesehen sind, um eine und die gleiche Achse anzutreiben.

7. Fahrzeug (1) nach einem der Ansprüche 1 bis 6, **dadurch gekennzeichnet, dass** die besagten ersten (51) und zweiten (52) Antriebsmittel geeignet vorgesehen sind, um zwei unterschiedliche Achsen anzutreiben.

8. Fahrzeug (1) nach einem der Ansprüche 1 bis 6, **dadurch gekennzeichnet, dass** das besagte Fahrzeug (1) ein Containerfahrzeug ist.

9. Verfahren für die Verwendung eines Fahrzeugs (1) nach einem der vorgehenden Ansprüche, **dadurch gekennzeichnet, dass** ein vollständiger Zyklus ab einer ersten Stelle der Beladung/Entladung (A) über eine zweite Stelle der Entladung/Beladung (B) und zurück zu der besagten ersten Stelle (A) ausgeführt wird, indem die Beförderung mit Last unter der Wirkung der ersten Antriebsmittel (51) und die Beförderung ohne Last unter der Wirkung der zweiten Antriebsmittel (52) erfolgt, während einer Fahrt, die absichtlich verlangsamt wird, um die Umwandlung der Beförderungsenergie durch die Umwandlungsmittel (8) zu den Mitteln zur Energiespeicherung (9) zu erlauben, bei einer Geschwindigkeit, die durch die Befehlsteuerungsmittel geregelt wird, die geeignet vorgesehen sind, um Informationen mit den Umwandlungsmitteln (8) und mit den Mitteln zur Energiespeicherung (9) auszutauschen, und die kleiner gehalten wird als eine bestimmte Grenzgeschwindigkeit, und **dadurch gekennzeichnet, dass** während der Wartephase elektrische, durch die besagten Mittel zur Energiespeicherung (9) versorgte Antriebsmittel (10) benutzt werden.

10. Verfahren für die Verwendung eines Fahrzeugs (1) nach dem vorgehenden Anspruch, **dadurch gekennzeichnet, dass** die besagte Grenzgeschwindigkeit auf 15 km/Stunde bestimmt wird.
